# EUROPÄISCHE PATENTSCHRIFT

(11) **EP 3 697 969 B1**
(45) Veröffentlichungstag und Bekanntmachung des Hinweises auf die Patenterteilung: **20.07.2022**
(21) Anmeldenummer: 18782352.1
(22) Anmeldetag: 25.09.2018
(51) Int. Cl.: E02D 27/42, E02D 31/08, E02D 27/52, E04H 12/00, F03D 13/20, F03D 13/25

(54) **SOFT-SOFT GRÜNDUNG FÜR OFFSHORE-BAUWERKE**
SOFT-SOFT FOUNDATION FOR OFFSHORE STRUCTURES
FONDATION SOUPLE POUR BÂTIMENTS EN MER

(30) Priorität: 19.10.2017 DE 102017124412
(43) Veröffentlichungstag der Anmeldung: 26.08.2020
(73) Patentinhaber: RWE Renewables GmbH, 45145 Essen (DE)
(72) Erfinder: BARTMIN, Daniel, 25335 Elmshorn (DE); ZIPFEL, Bernadette, 21109 Hamburg (DE)
(74) Vertreter: Cohausz & Florack
(86) Internationale Anmeldenummer: PCT/EP2018/075888
(87) Internationale Veröffentlichungsnummer: WO 2019/076586

(56) Entgegenhaltungen:
- EP-A2- 1 008 747
- EP-A2- 2 522 850
- DE-A1- 3 414 706
- US-A- 4 895 481

## Beschreibung

### Gebiet

Die Erfindung betrifft eine Gründung für ein Offshore-Bauwerk.

### Hintergrund

Gründungen bzw. Gründungsstrukturen für Offshore-Bauwerke, insbesondere Offshore-Windenergieanlagen werden generell bzgl. ihrer Eigenfrequenz so ausgelegt, dass sie sich weitestgehend nicht mit anderen Frequenzanregungsbänder, z. B. dem des Rotors einer Turbine als Stromerzeugungsanlage überlappen. In der Regel wird bei einem sogenannten Monopile als Turm einer derartigen Windenergieanlage eine Eigenfrequenz f gewählt, die zwischen einem 1P- und einem 3P-Frequenzband liegt, wobei das 1P-Frequenzband einer Anregung aus der einfachen Rotorumdrehungszahl, und das 3P-Frequenz einer Anregung aus der dreifachen Umdrehungszahl des Rotors der Turbine entspricht. Insbesondere um Resonanzschwingungen zu vermeiden, wird versucht, die Eigenfrequenz des Offshore-Bauwerks, z. B. mindestens 10% oberhalb des 1P- und unterhalb des 3P-Frequenzbandes anzuordnen. Die Auslegung solcher "steifen" Türme bzw. Pfähle eines Offshore-Bauwerks wird auch als "soft-stiff" bezeichnet.

Insbesondere wurden bisher für einen Einsatz als Offshore-Windenergieanlagen beispielsweise Bodengründungen verwendet mit denen eine Eigenfrequenz oberhalb des 1P-Frequenzbandes erzielt werden kann. Andere Frequenzbänder der Eigenfrequenz einer Offshore-Windenergieanlage wurden aus den folgenden Gründen bisher vermieden:
i) Mögliche dynamische Wellenanregung und daraus resultierende Ermüdungsbeanspruchung bzw. Resonanzen der Turmstruktur des Offshore-Bauwerks;
ii) Insbesondere Turbinen einer Offshore-Windenergieanlage erlauben regelmäßig nur geringe Toleranzen hinsichtlich langfristiger Schiefstellungen (z. B. verursacht durch einen Tidenhub des im Offshore-Bereich herrschenden Seegangs); und
iii) Weiche Strukturgründungen widersprechen häufig normierten Nachweiskriterien der Geotechnik.

Ferner sind schwimmende Gründungen zur Aufnahme einer Turmstruktur von einer Offshore-Windenergieanlage bekannt, wobei diese Gründungen in der Regel Wassertiefen von mehr als 20 m, bzw. bevorzugt sogar mehr als 40 m erfordern. Derartige schwimmende Fundamente für den Einsatz im Offshore-Bereich bei Windenergieanlagen erfordern zudem aufwendige Verankerungssysteme und flexible schwimmende Kabelführungen.

Mitunter können in küstennahen Gewässern, in denen häufig eine Wassertiefe von etwa 40 m nicht überschritten wird, und die zudem beispielsweise aufgrund von weichem Boden eine Bodengründung eines Turms für eine Offshore-Windenergieanlage, und aufgrund einer mangelnden Wassertiefe eine schwimmende Gründung für einen Turm von einer Offshore-Windenergieanlage nicht erlauben, entsprechend nur durch sehr kostenintensive Lösungen ermöglicht werden oder es wurde aufgrund dessen auf diese verzichtet.

Aus der DE 10 2008 008 760 A1 ist eine Einrichtung zur Verminderung der Strömungsbelastung an Türmen von Offshore-Windenergieanlagen bekannt, wo im Höhenbereich intensiver Strömungsbeaufschlagung um den Turm eine Ummantelung mit einer strömungswiderstandsgünstigen Oberflächenstruktur angebracht ist, derart, dass Meeres-Oberflächenströmungen und insbesondere stark ausgeprägte Wellen gegenüber blanken herkömmlichen Turmausführungen geringere horizontale Kräfte auf den Turm ausüben.

Aus der EP 2 522 850 A2 ist ein Turmschwingungstilger für einen Turm oder eine Windenergieanlage bekannt, der ein erstes Pendel mit einer ersten Pendellänge und einer ersten Masse aufweist, das als hängendes Pendel ausgebildet ist. Für eine flexible Einstellung einer Resonanzfrequenz des Turmschwingungstilgers und zum Erreichen einer niedrigen Eigenfrequenz bei geringer Bauhöhe weist der Turmschwingungstilger ein zweites Pendel mit einer zweiten Pendellänge und einer zweiten Masse auf, das als stehendes Pendel ausgebildet ist, wobei die Massen in Wirkrichtung über mindestens ein Koppelelement aneinander gekoppelt sind.

### Allgemeine Beschreibung einiger beispielhafter Ausführungsformen

Es wäre wünschenswert, insbesondere in küstennahen Gewässern, in denen häufig eine Wassertiefe von etwa 40 m nicht überschritten wird, eine kostengünstige Lösung für eine Gründung für ein Offshore-Bauwerk, insbesondere eine Offshore-Windenergieanlage bereitstellen zu können, die insbesondere gegenüber starke Auslenkungen tolerant ist und sich durch große Verformbarkeit extremen Lasten entziehen kann.

Vor dem Hintergrund des dargestellten Standes der Technik ist es somit die gegenständliche Aufgabe, die beschriebenen Probleme zumindest teilweise zu verringern oder zu vermeiden, das heißt insbesondere eine kostengünstige Möglichkeit bereitzustellen, um ein Offshore-Bauwerk gründen zu können, dass gegenüber starken Auslenkungen tolerant ist und sich durch eine große Verformbarkeit extremen Lasten entziehen kann.

Diese Aufgabe wird gegenständlich durch eine Gründung mit den Merkmalen des Anspruchs 1 gelöst.

Im Folgenden werden einige beispielhafte Ausführungsformen detaillierter beschrieben:
Ein Offshore-Bauwerk ist beispielsweise eine Offshore installierte Windenergieanlage. Ferner kann ein Offshore-Bauwerk beispielsweise eine Umspannanlage, oder eine Bohr- oder Förderplattform sein.

Bestimmte Offshore-Bauwerke, insbesondere Windenergieanlagen, werden regelmäßig mit einer Gründung im Meeresboden befestigt. Ein gängiger Fundamenttyp beispielsweise bei Windenergieanlagen ist ein sogenannter Monopile, wobei der Turm der Windenergieanlage sich bis auf den Meeresboden erstreckt, und ein Verankerungsabschnitt im Meeresboden verankert ist. Der Turm wird dann vollständig durch seine Verankerung bzw. den Verankerungsabschnitt im Meeresboden gehalten.

Um gegenüber starken Auslenkungen tolerant zu sein, und sich ferner durch eine große Verformbarkeit extremen Lasten entziehen zu können, muss die Gründung eine große Bewegung des Offshore-Bauwerks ermögliche. Offshore-Bauwerke, deren Eigenfrequenz oberhalb des 1P-Frequenzbandes angeordnet ist, erlauben dies nicht.

Im Gegensatz hierzu erstreckt sich der gegenständliche Verankerungsabschnitt des Turms weniger tief in den Meeresboden, wobei ohne zusätzlich Befestigungs- und/oder Stabilisierungselemente der Turm nicht Kippstabil wäre, also umkippen könnte. Entsprechend umfasst die gegenständliche Gründung zumindest ein Rückstellelement, wobei das zumindest eine Rückstellelement derart (z. B. geometrisch) ausgebildet ist, dass bei einer Schiefstellung des Turms, in der die Längserstreckungsrichtung des Turms außerhalb einer vertikal verlaufenden Achse verläuft, durch das zumindest eine Rückstellelement Zug- und/oder Druckkräfte auf den Turm übertragbar sind, so dass der Turm aufrichtbar ist. Derart ist der Turm kippstabil.

Die gegenständliche Gründung erlaubt eine starke Auslenkung des Turms, wobei ein entsprechendes Offshore-Bauwerk eine Eigenfrequenz aufweist, die unterhalb des 1P-Frequenzbandes liegt.

Der Turm hat beispielsweise eine derartige Länge, dass zumindest ein unteres Ende (z. B. ein Teil des Verankerungsabschnitts) des Turms in den Meeresboden eingreift. Beispielsweise greift das untere Ende weniger tief in den Meeresboden ein, als dies bei einer steifen Bodengründung (z. B. bei einer verwendeten ausschließlichen Bodengründung bei einem Monopile) erforderlich ist.

Der Turm besteht beispielsweise aus einem Stahlbeton und/oder umfasst ein Stahlfundament. Ferner kann der Turm beispielsweise aus einem GlasfaserverbundWerkstoff, oder einem Carbonverbund-Werkstoff, um nur einige nicht-limitierende Beispiele zu nennen, bestehen oder diese zumindest teilweise umfassen.

In einer beispielhaften Ausgestaltung des Gegenstandes nach allen Aspekten umfasst das Offshore-Bauwerk eine Stromerzeugungsanlage und die Gründung, wobei die Eigenfrequenz unterhalb einer Anregung aus einer einfachen Umdrehungszahl 1P von zumindest einem mit der Stromerzeugungsanlage verbindbaren und rotierenden anregenden Bauelement erfolgt.

Das anregende Bauelement ist beispielsweise zumindest ein mit der Stromerzeugungsanlage verbindbares Rotorblatt einer Windenergieanlage. Die Stromerzeugungsanlage ist in diesem Fall beispielsweise eine Turbine der Windenergieanlage.

Eine Limitierung der Eigenfrequenz des Offshore-Bauwerks kann beispielsweise durch eine Einspannung zumindest eines Teils des Turms im Meeresboden erfolgen. Grundsätzlich erhöht sich die Eigenfrequenz (verschiebt sich weiter zunächst in das 1P-Frequenzband, anschließend in Richtung des 3P-Frequenzbandes (entspricht der einer Anregung aus einer dreifachen Umdrehungszahl von zumindest einem anregenden Bauelement, z. B. zumindest einem Rotorblatt einer Windenergieanlage) und anschließend über das 3P-Frequenzband hinaus).

Eine weitere Limitierung der Eigenfrequenz des Offshore-Bauwerks kann beispielsweise durch eine Veränderung des Durchmessers von dem Turm erfolgen, wobei je größer der Durchmesser des Turms ist, sich wiederrum die Eigenfrequenz des Offshore-Bauwerks erhöht (Verschiebung der Eigenfrequenz des Offshore-Bauwerks in Richtung des 3P-Frequenzbandes und darüber hinaus).

Die gegenständliche Gründung ist folglich eine Kombination aus einem Fundamenttyp eines Monopiles (bodengegründetes Fundament) und eines schwimmenden Fundaments, und kann beispielsweise mit dem Begriff "halbschwimmendes Fundament" bzw. "halbschwimmende Gründung" bezeichnet werden.

In einer gegenständlichen Ausgestaltung nach allen Aspekten liegt die Eigenfrequenz des Offshore-Bauwerks unterhalb einer Frequenz von 0,1 Hz.

Bei einer Eigenfrequenz des Offshore-Bauwerks unterhalb des 1P-Frequenzbandes wird per se eine weiche Struktur konzipiert. Entsprechend liegt die Eigenfrequenz des Offshore-Bauwerks bewusst unterhalb des regelmäßig angestrebten Frequenzbandes, das zwischen dem 1P- und dem 3P-Frequenzband liegt. Die gegenständliche Gründung strebt an, insbesondere bei hohen Strukturen (Höhe des Offshore-Bauwerks) und einer Anordnung des Offshore-Bauwerks in tiefen Gewässern eine Eigenfrequenz von kleiner als 1P und kleiner als JONSWAP (< 1P < JONSWAP = 0,1 Hz) zu wählen. JONSWAP bezeichnet eine Anregung des Offshore-Bauwerks durch den herrschenden Seegang und optional zusätzlich den Tidenhub.

Damit bei der gegenständlichen Gründung kurz- und langfristig extreme Schiefstellungen vermeidbar sind bzw. ausgeglichen werden können, umfasst die gegenständliche Gründung zumindest ein Rückstellelement, wie z. B. Auftriebskörper, (geometrische, z. B. bauchförmige) Federelemente, flexible Verankerungen (z. B. Seilverankerungen), oder eine Kombination hiervon, um nur einige nicht-limitierende Beispiele zu nennen.

Eine beispielhafte Ausgestaltung des Gegenstandes nach allen Aspekten sieht vor, dass der im Meeresboden verankerbare Verankerungsabschnitt des Turms in den Meeresboden eingreift, wobei bei der Schiefstellung des Turms der in den Meeresboden eingreifende Verankerungsabschnitt des Turms im Meeresboden bewegbar ist.

Entsprechend kann sich der Verankerungsabschnitt beispielsweise in Richtung von zwei Freiheitsgraden innerhalb des Meeresbodens bewegen. Die Bewegung in Richtung der zwei Freiheitsgrade erfolgt beispielsweise innerhalb einer im Wesentlichen horizontalen Ebene. Bei einer Schiefstellung des Turms z. B. verursacht durch ein Kippen des Turms kann beispielsweise eine derartige Bewegung des Verankerungsabschnitts des Turms in zumindest eine Richtung innerhalb dieser zwei Freiheitsgrade erfolgen. Ferner kann der Verankerungsabschnitt des Turms beispielsweise ein Loch oder mehrere Löcher aufweisen, durch welche bei Bewegung des Verankerungsabschnitts im Meeresboden zumindest Teile des Meeresbodens durchfließen bzw. durchtreten können. Es versteht sich, dass der Meeresboden in diesem Fall eine weiche Struktur aufweist (z. B. durch eine Wassersättigung), so dass entsprechend zumindest Teile des Meeresbodens durch das ausgebildete Loch oder die ausgebildeten Löcher im Verankerungsabschnitt durchtreten können.

Eine gegenständliche Ausgestaltung nach allen Aspekten sieht vor, dass die Schiefstellung des Turms relativ zu dem Meeresboden, die in einem Grenzzustand der Tragfähigkeit der Gründung eintritt, größer 0,10°, insbesondere größer 0,20° und insbesondere größer 0,5° ist, und die Schiefstellung nach einer zyklischer Belastung größer als 0,05° ist.

Der Grenzzustand der Tragfähigkeit wird auch mit ULS Lasten (Ultimate Limit State) bezeichnet. Die Schiefstellung relativ zu dem Meeresboden, und die Schiefstellung nach zyklischer Belastung bezieht sich auf eine theoretische Betrachtung, wobei in dieser theoretischen Betrachtung beispielsweise das zumindest eine Rückstellelement unberücksichtigt bleibt.

Ferner konvergiert der Grenzzustand der Tragfähigkeit bei einer iterativen Berechnung, bei der die Schiefstellung des Turms relativ zu dem Meeresboden größer 0,10°, insbesondere größer 0,20° und insbesondere größer 0,5° beträgt, und die Schiefstellung nach einer zyklischer Belastung größer als 0,05° ist, nicht. Auch diese iterative Berechnung erfolgt ohne Berücksichtigung von dem zumindest einen Rückstellelement, das einer aufgetretenen Schiefstellung des Turms entgegenwirkt.

In einer gegenständlichen Ausgestaltung nach allen Aspekten ist ein oberer Abschnitt des Turms relativ zu dem Verankerungsabschnitt des Turms bewegbar, wobei bei einer Schiefstellung des Turms der Verankerungsabschnitt im Meeresboden im Wesentlichen in seiner Position verharrt.

Zwischen dem oberen Abschnitt und dem Verankerungsabschnitt des Turms ist beispielsweise ein Fundamentgelenk ausgebildet. Dieses Fundamentgelenk kann beispielsweise gefedert und/oder gedämpft sein, beispielsweise mittels entsprechend angeordneter bzw. von dem Fundamentgelenk umfasste Feder- und/oder Dämpfungselemente, die die Kippstabilität des Turms versteifen.

Der obere Abschnitt des Turms ist gegenüber dem Verankerungsabschnitt des Turms beispielsweise in Richtung von zumindest zwei Freiheitsgraden beweglich, z. B. zum Kippen des Turms in Richtung einer horizontalen Ebene des im Wesentlichen senkrecht angeordneten Turms.

Eine beispielhafte Ausgestaltung des Gegenstandes nach allen Aspekten sieht vor, dass der Verankerungsabschnitt des Turms im Wesentlichen hohlzylindrisch ausgebildet ist.

Entsprechend ist der Verankerungsabschnitt des Turms derart im Meeresboden verankert, dass Teile des Meeresbodens den hohlzylindrischen Bereich des Verankerungsabschnitts füllen. Dies ermöglicht eine bessere Verankerung des Verankerungsabschnitts im Meeresboden, und somit des Offshore-Bauwerks.

In einer weiteren gegenständlichen Ausgestaltung nach allen Aspekten ist der obere Abschnitt des Turms zumindest teilweise innerhalb und in einem Aufnahmebereich des Verankerungsabschnitts des Turms beweglich gelagert, wobei insbesondere der Verankerungsabschnitt des Turms im Aufnahmebereich mit einem Füllmaterial verfüllt ist.

Die bewegliche Lagerung des oberen Abschnitts des Turms in dem Aufnahmebereich des Verankerungsabschnitts von dem Turm, in dem der obere Abschnitt des Turms aufnehmbar ist, wird beispielsweise durch ein ausgebildetes Fundamentgelenk realisiert. Wie bereits vorstehend beschrieben, kann dieses Fundamentgelenk beispielsweise gefedert und/oder gedämpft sein, beispielsweise mittels entsprechend angeordneter bzw. von dem Fundamentgelenk umfasste eine oder mehrere Feder- und/oder Dämpfungselemente.

Eine beispielhafte Ausgestaltung des Gegenstandes nach allen Aspekten sieht vor, dass sich der obere Abschnitt des Turms konisch zulaufend innerhalb des Aufnahmebereichs des Verankerungsabschnitts von dem Turm erstreckt.

Der Verankerungsabschnitt des Turms ist beispielsweise hohl bzw. hohlzylindrisch ausgebildet, so dass der obere Abschnitt des Turms in den Verankerungsabschnitt des Turms eingreifen kann. Der obere Abschnitt des Turms weist beispielsweise eine zylindrische Form auf, die sich nach unten hin in den Verankerungsabschnitt hinein verjüngt.

Beispielsweise ist der Verankerungsabschnitt des Turms in den Meeresboden zumindest teilweise eingreifend bzw. einragend angeordnet, und der obere Abschnitt des Turms ist oberhalb des Meeresbodens angeordnet. Alternativ ist der Verankerungsabschnitt des Turms vollständig in den Meeresboden eingreifend bzw. einragend angeordnet, und der obere Abschnitt des Turms ist innerhalb des Verankerungsabschnitts angeordnet, so dass zumindest ein Teil von dem oberen Teil des Turms innerhalb des Verankerungsabschnitts ebenfalls - von dem Verankerungsabschnitt umschlossen - in den Meeresboden eingreift.

In einer gegenständlichen Ausgestaltung nach allen Aspekten weist der Aufnahmebereich des Verankerungsabschnitts von dem Turm zumindest ein Feder- und/oder Dämpfungselement auf, so dass bei Bewegung des oberen Abschnitts des Turms relativ zu dem Verankerungsabschnitt des Turms der obere Abschnitt des Turms feder- und/oder dämpfbar ist.

Das zumindest eine Feder- und/oder Dämpfungselement kann beispielsweise das Fundamentgelenk federn und/oder dämpfen. Durch das zumindest eine Feder- und/oder Dämpfungselemente ist beispielsweise die Kippstabilität des Turms versteifbar.

Eine beispielhafte Ausgestaltung des Gegenstandes nach allen Aspekten sieht vor, dass das zumindest eine Rückstellelement zumindest einen Auftriebskörper umfasst oder als zumindest ein Auftriebskörper ausgebildet ist, wobei insbesondere der zumindest eine Auftriebskörper eine im Wesentlichen konische oder gewölbte Geometrie aufweist.

Durch die Auslegung der gegenständlichen Gründung derart, dass das Offshore-Bauwerk eine Eigenfrequenz unterhalb des 1P-Frequenzbandes aufweist, kann es erforderlich sein, insbesondere um ein Absenken bzw. Absinken des Offshore-Bauwerks zu verhindern, dass zumindest ein Auftriebskörper von der Gründung umfasst ist. Insgesamt müssen die von der Verankerung der Gründung im Meeresboden und dem zumindest einen Auftriebskörper resultierenden Kräfte der Gewichtskraft des Offshore-Bauwerks entgegenwirken.

Je tiefer der Verankerungsabschnitt des Turms in den Meeresboden eingreift, umso weniger Auftriebskraft ist beispielsweise von dem zumindest einen Auftriebskörper erforderlich, um ein Absenken bzw. Absinken des Offshore-Bauwerks zu vermeiden.

Ferner ergibt sich eine geringere Eigenfrequenz des Offshore-Bauwerks durch den von dem zumindest einen Auftriebskörper verursachten Auftrieb, wodurch eine Limitierung der Eigenfrequenz erfolgen kann. Dies ist insbesondere bedingt durch die halbschwimmende Gründung des Offshore-Bauwerks.

In einer weiteren gegenständlichen Ausgestaltung nach allen Aspekten ist der zumindest eine Auftriebskörper unterhalb der Wasseroberfläche und den Turm zumindest teilweise in einer horizontalen Ebene umrundend angeordnet.

Alternativ ist im aufrechten Zustand des Turms der zumindest eine Auftriebskörper auf der Wasserlinie aufliegend angeordnet. Beispielsweise kann der zumindest eine Auftriebskörper an zumindest einem sich von der äußeren Wandung des Turms erstreckenden Arm angeordnet sein.

Eine beispielhafte Ausgestaltung des Gegenstandes nach allen Aspekten sieht vor, dass das zumindest eine Rückstellelement einen oder mehrere Anker umfasst, wobei die einen oder mehreren Anker mit dem Meeresboden verbindbar sind und mit dem Turm jeweils mittels einer flexiblen Verbindung verbunden sind, die bei Schiefstellung des Turms eine rückstellende Zug- und/oder Druckkraft in die zur Schiefstellung entgegengesetzte Richtung durch eine Straffung der flexiblen Verbindung erzeugen.

Die flexible Verbindung ist beispielsweise z. B. eine Kette oder ein Seil, die eine sogenannte Kettenlinie ausbilden. Die flexible Verbindung verursacht bei Schiefstellung des Turms beispielsweise eine rückstellende Zug- und/oder Druckkraft, z. B. eine Seil- und/oder Kettenkraft in die zur Schiefstellung entgegengesetzte Richtung durch eine Straffung dieser Kettenlinie.

Die einen oder mehreren Anker bilden beispielsweise zusammen mit den jeweiligen flexiblen Verbindungen ein Ankersystem aus.

In einer gegenständlichen Ausgestaltung nach allen Aspekten umfasst das zumindest eine Rückstellelement eine oder mehrere Stabilisierungseinrichtungen oder ist als eine oder mehrere Stabilisierungseinrichtungen ausgebildet, wobei vorzugsweise die einen oder mehreren Stabilisierungseinrichtungen von dem Turm ausgehend ausfahrbar sind, oder bevorzugt integrierte Kreiselstabilisatoren sind.

Alternativ sind die einen oder mehreren Stabilisierungseinrichtungen an dem Turm fest installiert.

In einer weiteren gegenständlichen Ausgestaltung ist das zumindest eine Rückstellelement ein mechanisches Verankerungssystem. Ein derartiges mechanisches Verankerungssystem umfasst beispielsweise ein Ankerseil oder mehrere Ankerseile, wobei das eine Ankerseil oder die mehreren Ankerseile z. B. mit sogenannten Suction Buckets und/oder Pfählen verbunden sind. Die Suction Buckets und/oder die Pfähle ermöglichen dabei eine (zusätzliche) Verankerung im Meeresboden.

Eine beispielhafte Ausgestaltung des Gegenstandes nach allen Aspekten sieht vor, dass der Schwerpunkt des Offshore-Bauwerks derart ausgelegt ist, dass Anteile von einem Bodeneigengewicht und zu überwindender Bodenreibungskräfte des Meeresboden unterhalb des Schwerpunktes von einer von der Gründung verdrängten Flüssigkeit liegt.

Durch eine derartige Anordnung des Schwerpunktes des Offshore-Bauwerks wird das Offshore-Bauwerk unempfindlicher gegenüber Kräften, die auf ein Kippen des Offshore-Bauwerks hinwirken. Je tiefer der Schwerpunkt anordenbar ist, umso größer wird die Kippstabilität des Offshore-Bauwerks. Insbesondere bei als Offshore-Windenergieanlagen ausgebildeten Offshore-Bauwerken ist jedoch eine niedrige Anordnung des Schwerpunktes mitunter herausfordernd, da durch die am obersten Ende des Turms angeordnete Stromerzeugungsanlage, umfassend z. B. eine Turbine und mehrere Rotorblätter, und das hohe Gewicht der Stromerzeugungsanlage der Schwerpunkt in vertikaler Richtung nach oben verschoben wird.

Eine rückstellende Wirkung wird beispielsweise erzeugt, indem der Schwerpunkt unterhalb eines Drehpunktes liegt. Daher ist es vorteilhaft, in einer weiteren möglichen Ausbildung den Gesamt-Schwerpunkt nach unten zu verlagern, z. B. in den unteren Teil eines im Boden eingebrachten Hohlprofils, das beispielsweise den Verankerungsabschnitt repräsentiert. Dies kann beispielsweise auch nachträglich nach einer bereits im Meeresboden angeordneten Gründung, z. B mit einer Zementsuspension und/oder einem verpressen in dem Hohlprofil, durchgeführt werden.

Eine weitere beispielhafte Ausgestaltung nach allen Aspekten ist dadurch gekennzeichnet, dass der unter Berücksichtigung der Bodenreaktionskräfte und des z. B. durch Mantelreibung mobilisierten Bodeneigengewichts der resultierende Gewichts-Schwerpunkt des Offshore-Bauwerks unterhalb des Formschwerpunktes bzw. Auftriebsschwerpunktes liegt

Eine weitere beispielhafte Ausgestaltung nach allen Aspekten ist dadurch gekennzeichnet, dass unter Berücksichtigung der Bodenreaktionskräfte und des z B. durch Mantelreibung mobilisierten Bodeneigengewichts der resultierende Gewichts-Schwerpunkt des Offshore-Bauwerks unterhalb des Drehpunkts liegt.

Eine weitere beispielhafte Ausgestaltung nach allen Aspekten ist dadurch gekennzeichnet, dass unter Berücksichtigung der Bodenreaktionskräfte und des z. B. durch Mantelreibung mobilisierten Bodeneigengewichts der resultierende Schwerpunkt des Offshore-Bauwerks unterhalb des Metazentrums liegt.

Die gegenständliche Gründung kann beispielsweise zumindest teilweise, d.h. nicht vollständig, ein schwimmender Körper sein. Das Metazentrum ist beispielsweise der Schnittpunkt der Auftriebsvektoren, die zu zwei benachbarten Winkellagen gehören. Zu jeder Drehachse und jeder Winkellage (bei Schiefstellung des Turms) existiert ein Metazentrum.

Eine weitere beispielhafte Ausgestaltung nach allen Aspekten ist dadurch gekennzeichnet, dass der Schwerpunkt des Offshore-Bauwerks derart ausgelegt ist, dass der Schwerpunkt unterhalb des Drehpunkts liegt und/oder das Metazentrum oberhalb des Gewichts-Schwerpunktes liegt.

Eine weitere beispielhafte Ausgestaltung nach allen Aspekten ist dadurch gekennzeichnet, dass unter Berücksichtigung von zwischen Boden (Meeresboden) und einer Gründungswand z. B. durch eine Bewegung der Gründung erzeugte hydrostatische Sogkräfte, die optional zusätzlich durch ein aktives Pumpen bzw. durch aktives Pumpen von Ballastwasser erzeugte Gewichtsverlagerungen erzeugbar sind, Gewichtsverlagerungen des Turms der Gründung möglich sind, so dass eine bei Schiefstellung des Turms rückstellende Kraft - im vorliegenden Fall z. B. die Sogkraft bzw. die Sogkräfte - zur Wiederaufrichtung Turms führt.

Eine weitere beispielhafte Ausgestaltung des Gegenstandes nach allen Aspekten sieht vor, dass der Verankerungsabschnitt des Turms doppelwandig ausgebildet ist. Für den Fall, dass der Verankerungsabschnitt des Turms in einem steifen Meeresboden verankert ist, kann beispielsweise bei Bewegung des Boden in seitlicher Richtung (z. B. ein Drehbewegung) sich die äußere Turmwand vom Boden lösen, wodurch Sogkräfte und/oder Saugkräfte entstehen können, die wiederum Rückstellkräfte entstehen lassen können. Auch derart kann die Kippstabilität des Turms der Gründung positiv beeinflusst werden.

In einer beispielhaften Ausgestaltung nach allen Aspekten ist das Offshore-Bauwerk eine Windenergieanlage, die Stromerzeugungsanlage eine Turbine und das rotierende Bauelement ist zumindest ein Rotorblatt bzw. umfasst mehr als ein Rotorblatt, wobei das zumindest eine Rotorblatt mit der Turbine verbindbar ist.

Die gegenständliche Aufgabe wird ferner durch ein Offshore-Bauwerk nach dem Anspruch 14 gelöst, umfassend eine gegenständliche Gründung.

Es können ferner beispielsweise künstlich hydrostatische Lösungen ermöglicht werden, bei vorstehend genanntem Beispiel beispielsweise eine Doppelwandung des Pfahls, die bewusst entstehende Sogkräfte/Saugkräfte ausnutzt, die ebenfalls die Kippstabilität des Offshore-Bauwerks gewährleisten können.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

In der Zeichnung zeigt
- Fig. 1: eine schematische Darstellung eines Offshore-Bauwerks umfassend eine gegenständliche Gründung;
- Fig. 2: eine schematische und ausschnittsweise Darstellung eines Offshore-Bauwerks umfassend eine gegenständliche Gründung;
- Fig. 3a-d: jeweils eine weitere schematische ausschnittsweise Darstellung eines Offshore-Bauwerks umfassend eine gegenständliche Gründung;
- Fig. 4: ein Frequenzspektrum-Diagramm;
- Fig. 5: ein Blockdiagramm eines Ausführungsbeispiels einer Vorrichtung 500, welche insbesondere ein beispielhaftes Verfahren gemäß dem zweiten Aspekt ausführen kann; und
- Fig. 6: unterschiedliche Ausführungsbeispiele von Speichermedien, auf denen ein Ausführungsbeispiel eines gegenständlichen Computerprogrammes gespeichert sein kann.

### Detaillierte Beschreibung einiger beispielhafter Ausführungsformen

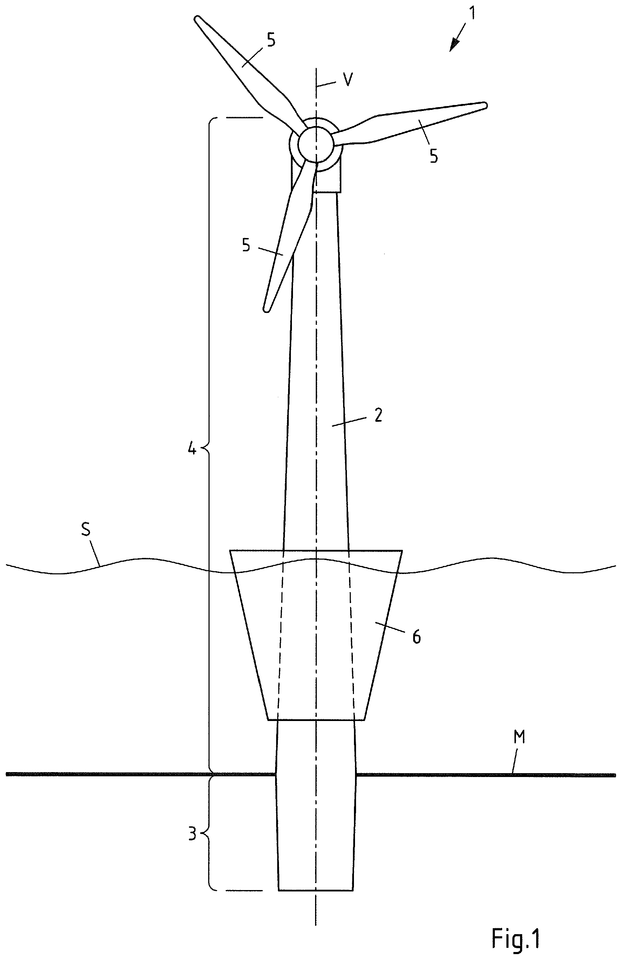

Fig.1 zeigt eine schematische Darstellung eines Offshore-Bauwerks 1, das mittels einer gegenständlichen Gründung zumindest teilweise auf dem Meeresboden 2 gegründet ist.

Das Offshore-Bauwerk 1 ist vorliegend eine Windenergieanlage, umfassend eine Turm 2, an welchen an seinem oberen Ende eine Stromerzeugungsanlage (z. B. eine Turbine, in der schematischen Zeichnung nach Fig. 1 nicht dargestellt) mit drei anregenden Bauelementen, vorliegend drei Rotorblätter 5 angeordnet sind.

Der Turm 2 ist in einen Verankerungsabschnitt 3 und einen darüber liegenden oberen Abschnitt 4 unterteilt. Der Verankerungsabschnitt 3 ist vorliegend im Meeresboden M verankert. Ferner umfasst der Turm ein Rückstellelement, vorliegend einen im Wesentlichen konisch-förmig ausgebildeten Auftriebskörper 6, welche den zylindrischen Turm 2 umrundet.

Der Auftriebskörper 6 sorgt neben seiner Funktion des Auftriebs für die Windenergieanlage ferner dafür, dass bei einer Schiefstellung des Turm 2 außerhalb einer vertikal verlaufenden Achse V durch den Auftriebskörper 6 Zug- und/oder Druckkräfte auf den Turm 2 übertragbar sind, so dass sich der Turm 2 nach einer Schiefstellung wieder aufrichtet und somit sich die Längserstreckungsrichtung des Turm 2 wieder im Wesentlichen auf der vertikal verlaufenden Achse V befindet. Der Auftriebskörper 6 befindet sich hierzu unterhalb der Wasseroberfläche S.

Der Turm 2 gründet teilweise im Meeresboden M, und teilweise ist dieser mittels des Auftriebskörpers 6 schwimmend gelagert, es handelt sich also um eine "halbschwimmende Gründung".

Das Offshore-Bauwerk 1, das mit einer gegenständlichen Gründung gegründet ist, weist eine Eigenfrequenz unterhalb einer Anregung aus einer einfachen Umdrehungszahl 1P von den drei Rotorblättern 5 der Stromerzeugungsanlage auf.

Die Auslegung der geringen Eigenfrequenz des Offshore-Bauwerks 1 wird dadurch ermöglicht, dass das Offshore-Bauwerk 1 mit einer geringeren Einbindungstiefe in dem Meeresboden M verankert ist. Entsprechend kann die Verankerung des Verankerungsabschnitts 3 im Meeresboden M alleine eine Kippstabilität des Offshore-Bauwerks nicht vollständig gewährleisten. Gleiches kann passieren, wenn der Meeresboden M, in den der Verankerungsabschnitt 3 verankert wird, weich ist, es sich z. B. um einen (stark) wassergesättigten Boden handelt. Die Kippstabilität wird vorliegend durch das Rückstellelement, vorliegend der den Turm 2 umrundende Auftriebskörper 6 gewährleistet.

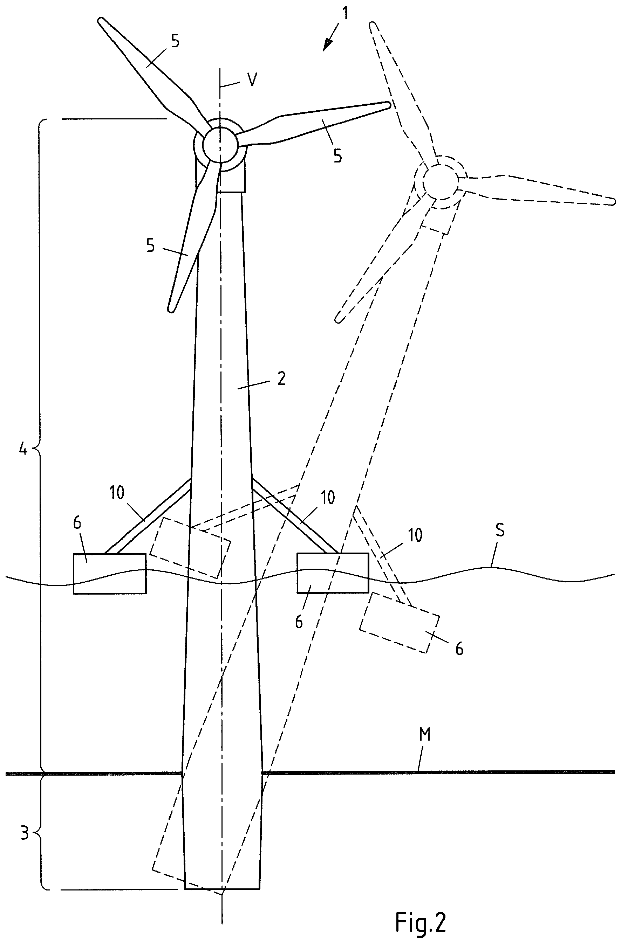

Fig. 2 zeigt eine schematische ausschnittsweise Darstellung eines Offshore-Bauwerks 1, welches im Unterschied zu Fig. 1 zumindest zwei Auftriebskörper 6 umfasst, die jeweils über ein Übergangsstück 10 (z. B: ein Arm) mit dem Turm 2 des Offshore-Bauwerks 1 verbunden sind. Die Auftriebskörper 6 schwimmen beide bei einer Ausrichtung des Turms 2, bei der die Längserstreckungsrichtung des Turms 2 im Wesentlichen parallel zu der vertikalen Achse V verläuft, auf der Wasseroberfläche S auf.

Der Verankerungsabschnitt 3 des Turms 2 ist bei einer Schiefstellung des Turms der innerhalb des Meeresbodens M bewegbar, wie in Fig. 2 schematisch durch die gestrichelte Schiefstellung des Turms 2 dargestellt ist. Bei der Schiefstellung befindet sich die Längserstreckungsrichtung des Turms 2 außerhalb der vertikal verlaufenden Achse V. Tritt eine Schiefstellung des Turms 2 auf, taucht zumindest einer der vorliegenden zwei Auftriebskörper in das den Turm 2 umgebende Wasser ein. Der eingetauchte Auftriebskörper 6 erzeugt nun eine Zug- und/oder Druckkraft, welche in die entgegengesetzte Richtung der Schiefstellung des Turms 2 wirkt. Der Turm 2 richtet sich in der Folge wieder auf.

Der in den Meeresboden M eingreifende Verankerungsabschnitt 3 des Turms 2 kann sich vorliegend in Richtung von zwei Freiheitsgraden innerhalb des Meeresbodens M bewegen. Bei einer Schiefstellung des Turms 2, z. B. verursacht durch ein Kippen des Turms 2 oder durch Seegang und/oder Windlast in zumindest einem Rotorblatt einer am oberen Ende des Turms angeordneten Stromerzeugungsanlage (in Fig. 2 nicht dargestellt) kann beispielsweise eine derartige Bewegung des Verankerungsabschnitts 3 des Turms 2 in zumindest eine Richtung innerhalb dieser zwei Freiheitsgrade erfolgen.

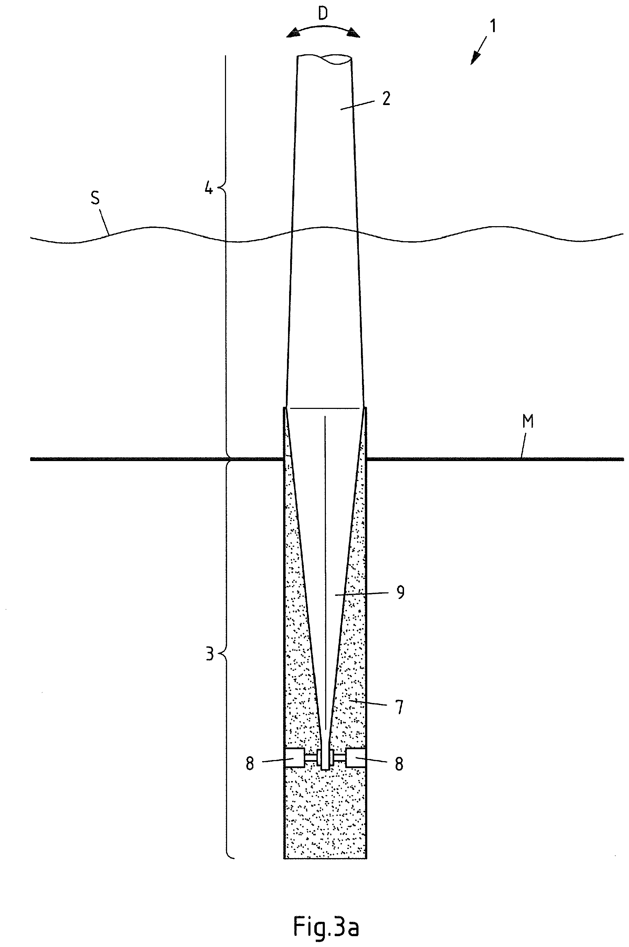

Fig. 3a zeigt eine weitere schematische ausschnittsweise Darstellung eines Offshore-Bauwerks 1, wobei ein oberer Abschnitt 4 des Turm 2 des Offshore-Bauwerks in Richtung von zumindest zwei Freiheitsgraden innerhalb des Verankerungsabschnitts 3 des Turms 2 bewegbar.

Vorliegend ist darüber hinaus der obere Abschnitt 4 des Turms 2 relativ zu dem Verankerungsabschnitt 3 des Turms 2 drehbar. Dies ist schematisch mittels des Doppelpfeils D angedeutet.

Der obere Abschnitt 4 des Turms 2 greift mit einem von diesem umfassten konisch zulaufenden Ende 9 in einen Aufnahmebereich des Verankerungsabschnitts 3 ein. Dieser Aufnahmebereich kann beispielsweise verfüllt sein, z. B. mit einem elastischen Füllmaterial 7, wie etwa einem Elastomer, Polymer, Sand-Ton, Sand-Ton-Gemisch, um nur einige nicht limitierende Beispiele zu nennen.

Ferner umfasst der Verankerungsabschnitt 3 des Turms 2 optionale Dämpfer- und Federelemente 8, die eine Schiefstellung des Turms 2, wobei der obere Abschnitt 4 gegenüber dem Verankerungsabschnitt 3 z. B. gekippt wird, dämpfen bzw. federn können. Zudem kann mittels der optionalen Dämpfer- und Federelemente 8 bei einer Schiefstellung des oberen Abschnitts 4 des Turms 2 eine rückstellende Zug- und/oder Druckkraft bewirkt werden, die zu einem Aufrichten des oberen Abschnitts 4 des Turms 2 nach einer erfolgten Schiefstellung des oberen Abschnitts 4 des Turms führen können.

Der Verankerungsabschnitt 3 des Turms 2 kann - wie vorliegend ausgebildet - nach unten hin offen sein, so dass eine Verankerung des Verankerungsabschnitts 3 im Meeresboden M sicher bewirkbar ist.

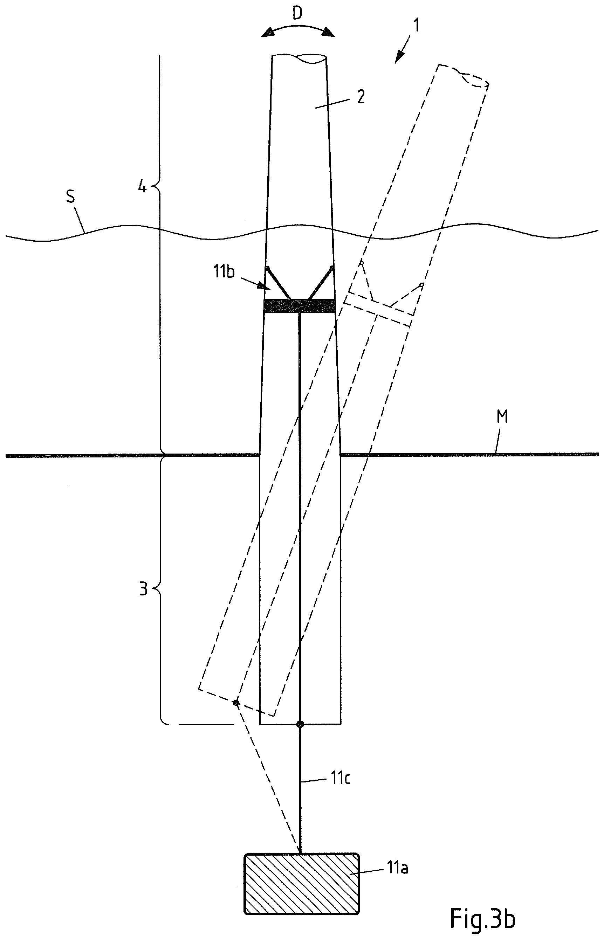

Fig. 3b zeigt eine Ankervorrichtung 11, die als zumindest ein Rückstellelement vorliegend zum Einsatz kommt. Ein Gewichtselement 11a ist unterhalb des Verankerungsabschnitts 3 in dem Meeresboden M angeordnet. Ein Ankerseil 11c verbindet das Gewichtselement 11a mit einer innerhalb des oberen Abschnitts 4 des Turms 2 angeordneten Anschlusselementes 11b. Bei einer Schiefstellung des oberen Abschnitts 4 des Turms 2 erzeugt die Ankervorrichtung 11 eine rückstellende Zug- und/oder Druckkraft, die zu einem Aufrichten des oberen Abschnitts 4 des Turms 2 führt. Eine Schiefstellung ist schematisch mittels der gestrichelten Schiefstellung des Turms 2 gezeigt.

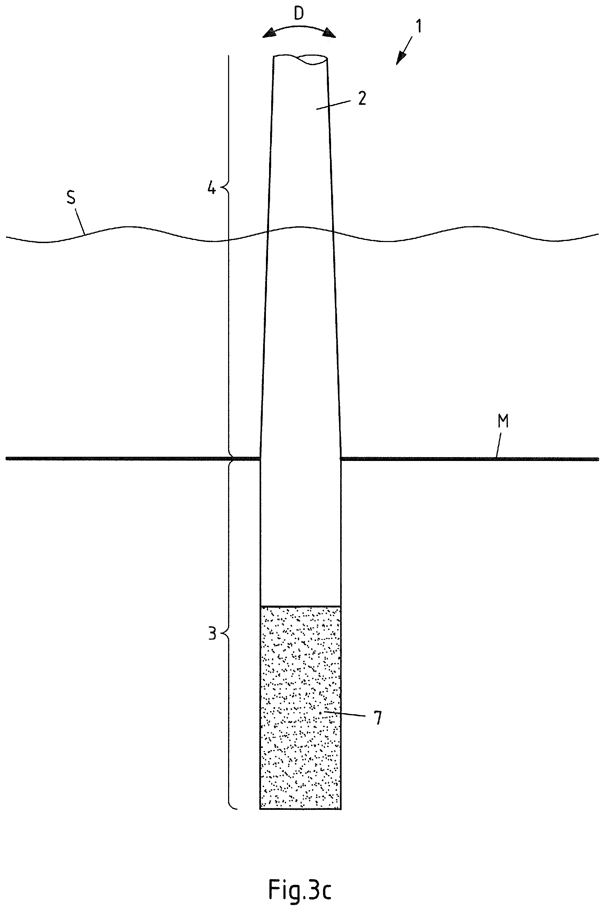

In Fig. 3c ist der Verankerungsabschnitt 3 mit einem verfüllten bzw. verpressten Volumen gefüllt. Hierbei handelt es sich beispielsweise um eine Zementsuspension, die z. B. mit schweren Zuschlägen angereichert ist, und/oder Stahlspäne oder dergleichen um nur einige nicht-limitierende Beispiele zu nennen, umfasst.

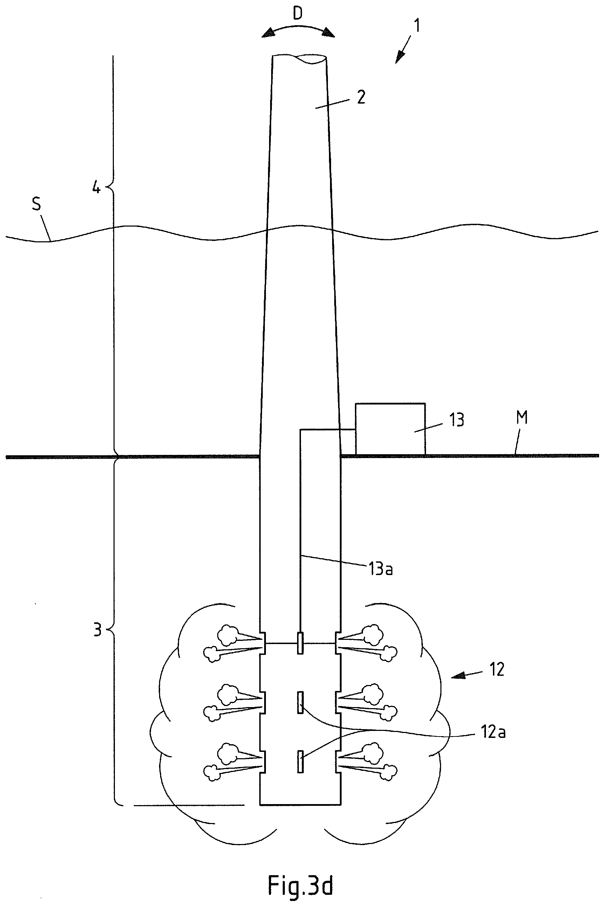

In Fig. 3d umfasst der Verankerungsabschnitt 3 des Turms 2 eine oder mehrere Öffnungen 12a. Durch diese Öffnungen 12a, die sich beispielsweise in einem losgelösten Bereich umliegend um den Verankerungsabschnitt 3 im Meeresboden M befinden, können durch hydrostatische Sogkräfte eine oder mehrere rückstellende Zug- und/oder Druckkräfte erzeugt werden. Diese können beispielsweise durch ein aktives Pumpen, vorliegend mit der Pumpe 13 erzeugt und/oder verstärkt werden. Die Pumpe 13 ist über eine oder mehrere Pumpleitungen 13a mit den Öffnungen 12a verbunden.

Durch ein aktives Pumpen bzw. durch aktives Pumpen von Ballastwasser kann eine Gewichtsverlagerung erzeugt werden, so dass bei einer Schiefstellung des Turms 2 die entsprechenden rückstellenden Kräfte erzeugbar sind. Dabei weist der Verankerungsabschnitt 3 beispielsweise die Öffnungen 12a umliegend und in regelmäßigen Abständen auf. Je nach Schiefstellung kann beispielsweise durch eine oder mehrere Öffnungen 12a (simultan) Ballastwasser gepumpt werden, so dass durch die folgende gerichtet wirkende Kraft eine entsprechende rückstellende Kraft erzeugbar ist, die der Schiefstellung des Turms 2 entgegenwirkt.

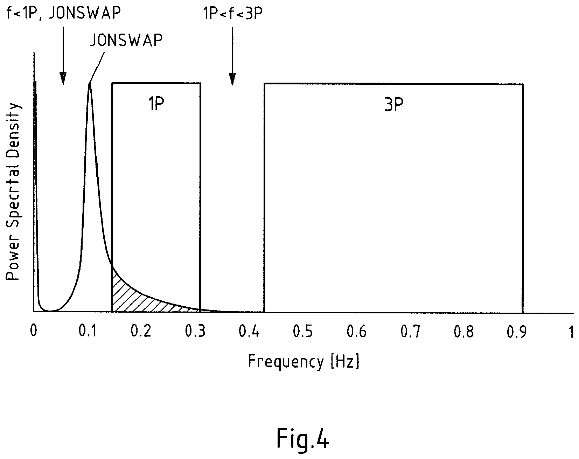

Fig. 4 zeigt ein Frequenzspektrum-Diagramm, in dem Erregerfrequenzen bei einem Betrieb einer Windenergieanlage dargestellt sind.

Wie bereits beschrieben, können für das Bestimmen einer Eigenfrequenz eines Gesamtsystems (Offshore-Bauwerk, insbesondere Windenergieanlage) aus einer Gründung bestehend aus Turm und einer Stromerzeugungsanlage (z. B. mit einem oder mehreren Rotorblättern) vorab Bereiche innerhalb eines Frequenzspektrums definiert werden, in dem die Eigenfrequenz liegen soll.

Beispielsweise erfährt eine Windenergieanlage im Betrieb eine (dynamische) Anregung insbesondere aus Windlasten, aus einer periodischen Anregung mit der einfachen Umdrehungszahl (Rotorfrequenz, 1P-Anregung; beispielsweise verursacht aus Unwuchten, die bei der Rotation der Rotorblättern auftreten), sowie aus einer weiteren periodischen Anregung aus dem Rotorblattdurchgang mit der dreifachen Umdrehungszahl (3P-Anregung; beispielsweise durch eine Anströmung des Rotorblatts mit Wind, wobei sich das Rotorblatt direkt vor dem Turm befindet).

Ferner ist in Fig. 4 das sogenannte JONSWAP-Spektrum dargestellt, das das Wellenenergiespektrum durch den Seegang bei Offshore-Bauwerk darstellt und ebenfalls eine Anregung des Offshore-Bauwerks bewirken kann.

Je näher die Eigenfrequenz der Windenergieanlage im Bereich dieser anregenden Frequenzen liegt, desto höher kann die Beanspruchung der mechanischen Komponenten und des Turms sein.

Wenn die erste Eigenfrequenz des Offshore-Bauwerks unterhalb der Frequenz aus der dreifachen Rotordrehzahl 3P liegt, wird die Auslegung des Offshore-Bauwerks als "soft-stiff" bezeichnet (Bereich "Target-Frequency" in Fig. 4). Ist die Auslegung des Offshore-Bauwerks zudem oberhalb der Frequenz aus der dreifachen Rotordrehzahl 3P, wird die Auslegung auch als "stiff-stiff" bezeichnet. Liegt hingegen die erste Eigenfrequenz des Offshore-Bauwerks unterhalb der Frequenz aus der einfachen Rotordrehzahl 1P, wird die Auslegung als "soft-soft" bezeichnet.

Es versteht sich, dass bei der Auslegung der Eigenfrequenz eines Offshore-Bauwerks auf eine Auslegung der Eigenfrequenz, die innerhalb des 1P- und/oder 3P-Frequenzbandes liegt, zur Vermeidung von vorzeitiger Materialermüdung und Verschleiß verzichtet werden sollte.

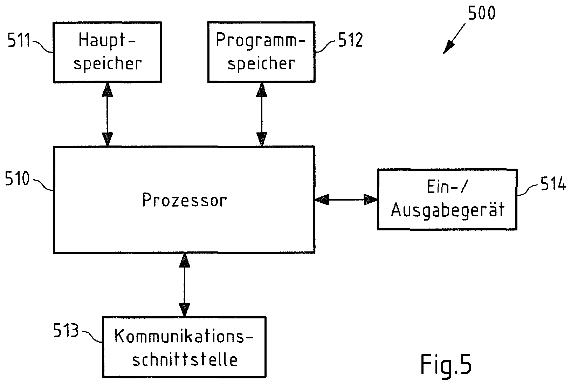

Fig. 5 zeigt ein Blockdiagramm eines Ausführungsbeispiels einer Vorrichtung 500, welche insbesondere ein beispielhaftes Verfahren ausführen kann. Die Vorrichtung 500 ist beispielsweise eine Vorrichtung gemäß dem dritten oder ein System gemäß dem vierten Aspekt.

Die Vorrichtung 500 kann insofern beispielsweise ein Computer, ein Desktop-Computer, ein Server, ein Thinclient oder ein tragbarer Computer (Mobilgerät), wie etwa ein Laptop-Computer, ein Tablet-Computer, ein persönlicher digitaler Assistent (PDA) oder ein Smartphone sein. Die Vorrichtung kann beispielsweise die Funktion eines Servers oder eines Clients erfüllen.

Prozessor 510 der Vorrichtung 500 ist insbesondere als Mikroprozessor, Mikrokontrolleinheit, Mikrocontroller, digitaler Signalprozessor (DSP), Anwendungsspezifische Integrierte Schaltung (ASIC) oder Field Programmable Gate Array (FPGA) ausgebildet.

Prozessor 510 führt Programmanweisungen aus, die in Programmspeicher 512 gespeichert sind, und speichert beispielsweise Zwischenergebnisse oder ähnliches in Arbeits- oder Hauptspeicher 511. Zum Beispiel ist Programmspeicher 512 ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Hauptspeicher 511 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 512 ist vorzugsweise ein lokaler mit der Vorrichtung 500 fest verbundener Datenträger. Mit der Vorrichtung 500 fest verbundene Datenträger sind beispielsweise Festplatten, die in die Vorrichtung 500 eingebaut sind. Alternativ kann der Datenträger beispielsweise auch ein mit der Vorrichtung 500 trennbar verbindbarer Datenträger sein wie ein Speicher-Stick, ein Wechseldatenträger, eine tragbare Festplatte, eine CD, eine DVD und/oder eine Diskette.

Programmspeicher 512 enthält beispielsweise das Betriebssystem von der Vorrichtung 500, das beim Starten der Vorrichtung 500 zumindest teilweise in Hauptspeicher 511 geladen und vom Prozessor 510 ausgeführt wird. Insbesondere wird beim Starten von Vorrichtung 500 zumindest ein Teil des Kerns des Betriebssystems in den Hauptspeicher 511 geladen und von Prozessor 510 ausgeführt. Das Betriebssystem von Vorrichtung 500 ist beispielsweise ein Windows -, UNIX-, Linux-, Android-, Apple iOS- und/oder MAC-Betriebssystem.

Das Betriebssystem ermöglicht insbesondere die Verwendung der Vorrichtung 500 zur Datenverarbeitung. Es verwaltet beispielsweise Betriebsmittel wie Hauptspeicher 511 und Programmspeicher 512, Kommunikationsschnittstelle 513, Ein- und Ausgabegerät 514, stellt unter anderem durch Programmierschnittstellen anderen Programmen grundlegende Funktionen zur Verfügung und steuert die Ausführung von Programmen.

Prozessor 510 steuert die Kommunikationsschnittstelle 513, welche beispielsweise eine Netzwerkschnittstelle sein kann und als Netzwerkkarte, Netzwerkmodul und/oder Modem ausgebildet sein kann. Die Kommunikationsschnittstelle 513 ist insbesondere dazu eingerichtet, eine Verbindung der Vorrichtung 500 mit anderen Vorrichtungen, insbesondere über ein (drahtloses) Kommunikationssystem, beispielsweise ein Netzwerk, herzustellen und mit diesen zu kommunizieren. Die Kommunikationsschnittstelle 513 kann beispielsweise Daten (über das Kommunikationssystem) empfangen und an Prozessor 510 weiterleiten und/oder Daten von Prozessor 510 empfangen und (über das Kommunikationssystem) senden. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet.

Des Weiteren kann Prozessor 510 zumindest ein Ein-/Ausgabegerät 514 steuern. Ein-/Ausgabegerät 514 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Ein-/Ausgabegerät 514 kann beispielsweise Eingaben eines Benutzers aufnehmen und an Prozessor 510 weiterleiten und/oder Informationen für den Benutzer von Prozessor 510 empfangen und ausgeben.

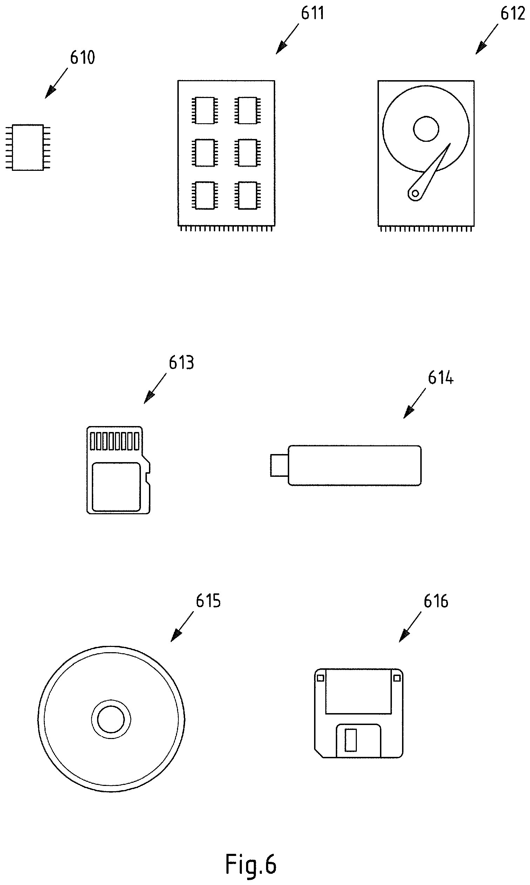

Fig.6 zeigt schließlich unterschiedliche Ausführungsbeispiele von Speichermedien, auf denen ein Ausführungsbeispiel eines gegenstandsgemäßen Computerprogrammes gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessor 510 der Fig. 5) sein, beispielsweise ein (nicht-flüchtiger oder flüchtiger) Programmspeicher des Prozessors oder ein Teil davon (wie Programmspeicher 512 in Fig. 5). Ausführungsbeispiele eines Speichermediums sind ein Flash-Speicher 610, eine SSD-Festplatte 611, eine magnetische Festplatte 612, eine Speicherkarte 613, ein Memory Stick 614 (z.B. ein USB-Stick), eine CD-ROM oder DVD 615 oder eine Diskette 616.

## Patentansprüche

1. Gründung für ein Offshore-Bauwerk, umfassend:
einen Turm (2) mit einem im Meeresboden (M) verankerbaren Verankerungsabschnitt (3) und einen am gegenüberliegenden Ende angeordneten Verbindungsabschnitt, wobei eine oberhalb der Wasseroberfläche (S) anordenbare Stromerzeugungsanlage mit dem Verbindungsabschnitt des Turms (2) verbindbar ist; und wobei
die Gründung ferner zumindest ein Rückstellelement umfasst, wobei das zumindest eine Rückstellelement mit dem Turm (2) direkt verbindbar oder über ein oder mehrere Übergangsstücke mittelbar verbindbar ist,
**dadurch gekennzeichnet, dass**
eine Eigenfrequenz des Offshore-Bauwerkes unterhalb einer Anregung aus einer einfachen Umdrehungszahl 1P von zumindest einem anregenden Bauelement liegt,
wobei die Eigenfrequenz des Offshore-Bauwerks unterhalb einer Frequenz von 0,15 Hz, insbesondere unterhalb einer Frequenz von 0,10 Hz liegt,
und wobei das zumindest eine Rückstellelement derart ausgebildet ist, dass bei einer Schiefstellung des Turms (2), in der die Längserstreckungsrichtung des Turms (2) außerhalb einer vertikal verlaufenden Achse (V) verläuft, durch das zumindest eine Rückstellelement Zug- und/oder Druckkräfte auf den Turm (2) übertragbar sind, so dass der Turm (2) aufrichtbar ist.

2. Gründung nach Anspruch 1, **dadurch gekennzeichnet, dass** der im Meeresboden (M) verankerbare Verankerungsabschnitt (3) des Turms (2) in den Meeresboden (M) eingreift, wobei bei der Schiefstellung des Turms (2) der in den Meeresboden (M) eingreifende Verankerungsabschnitt (3) des Turms (2) im Meeresboden (M) bewegbar ist.

3. Gründung nach Anspruch 2, **dadurch gekennzeichnet, dass** die Schiefstellung des Turms (2) relativ zu dem Meeresboden (M), die in einem Grenzzustand der Tragfähigkeit der Gründung eintritt, größer 0,10°, insbesondere größer 0,20° und insbesondere größer 0,5° ist, und die Schiefstellung nach einer zyklischer Belastung größer als 0,05° ist.

4. Gründung nach Anspruch 1, **dadurch gekennzeichnet, dass** ein oberer Abschnitt (4) des Turms (2) relativ zu dem Verankerungsabschnitt (3) des Turms (2) bewegbar ist, wobei bei einer Schiefstellung des Turms (2) der Verankerungsabschnitt (3) im Meeresboden (M) im Wesentlichen in seiner Position verharrt.

5. Gründung nach einem der vorhergehenden Ansprüche, **dadurch gekennzeichnet, dass** der Verankerungsabschnitt (3) des Turms (2) im Wesentlichen hohlzylindrisch ausgebildet ist.

6. Gründung nach Anspruch 4 oder Anspruch 5, **dadurch gekennzeichnet, dass** der obere Abschnitt (4) des Turms (2) zumindest teilweise innerhalb und in einem Aufnahmebereich des Verankerungsabschnitts (3) des Turms (2) beweglich gelagert ist, wobei insbesondere der Verankerungsabschnitt (3) des Turms (2) im Aufnahmebereich mit einem Füllmaterial verfüllt ist.

7. Gründung nach einem der Ansprüche 4 bis 6, **dadurch gekennzeichnet, dass** sich der obere Abschnitt (4) des Turms (2) konisch zulaufend innerhalb des Aufnahmebereichs des Verankerungsabschnitts (3) von dem Turm (2) erstreckt.

8. Gründung nach einem der Ansprüche 4 bis 7, **dadurch gekennzeichnet, dass** der Aufnahmebereich des Verankerungsabschnitts (3) von dem Turm (2) zumindest ein Feder- und/oder Dämpfungselement aufweist, so dass bei Bewegung des oberen Abschnitts (4) des Turm (2) relativ zu dem Verankerungsabschnitt (3) des Turms (2) der oberen Abschnitt (4) des Turms (2) feder- und/oder dämpfbar ist.

9. Gründung nach einem der vorhergehenden Ansprüche, **dadurch gekennzeichnet, dass** das zumindest eine Rückstellelement zumindest einen Auftriebskörper (6) umfasst oder als zumindest ein Auftriebskörper (6) ausgebildet ist, wobei insbesondere der zumindest eine Auftriebskörper (6) eine im Wesentlichen konische oder gewölbte Geometrie aufweist.

10. Gründung nach Anspruch 9, wobei der zumindest eine Auftriebskörper (6) unterhalb der Wasseroberfläche (S) und den Turm (2) zumindest teilweise in einer horizontalen Ebene umrundend angeordnet ist.

11. Gründung nach einem der vorhergehenden Ansprüche, **dadurch gekennzeichnet, dass** das zumindest eine Rückstellelement einen oder mehrere Anker umfasst, wobei die einen oder mehreren Anker mit dem Meeresboden (M) verbindbar sind und mit dem Turm (2) jeweils mittels einer flexiblen Verbindung verbunden sind, die bei Schiefstellung des Turms (2) eine rückstellende Zug- und/oder Druckkraft in die zur Schiefstellung entgegengesetzte Richtung durch eine Straffung der flexiblen Verbindung erzeugen.

12. Gründung nach einem der vorhergehenden Ansprüche, **dadurch gekennzeichnet, dass** das zumindest eine Rückstellelement eine oder mehrere Stabilisierungseinrichtungen umfasst oder als eine oder mehrere Stabilisierungseinrichtungen ausgebildet ist, wobei vorzugsweise die einen oder mehreren Stabilisierungseinrichtungen von dem Turm (2) ausgehend ausfahrbar sind, oder bevorzugt integrierte Kreiselstabilisatoren sind.

13. Gründung nach einem der vorhergehenden Ansprüche, **dadurch gekennzeichnet, dass** der Schwerpunkt des Offshore-Bauwerks derart ausgelegt ist, dass Anteile von einem Bodeneigengewicht und zu überwindender Bodenreibungskräfte des Meeresboden (M) unterhalb des Schwerpunktes von einer von der Gründung verdrängten Flüssigkeit liegt.

14. Offshore-Bauwerk, umfassend eine Gründung nach einem der Ansprüche 1 bis 13.

## Claims

1. Foundation for an offshore structure, comprising:
a tower (2) having an anchoring section (3) which is anchorable in a seabed (M) and a connecting section arranged at the opposite end, wherein a power generating plant which is arrangable above the water surface (S) is connectable to the connecting section of the tower (2); and wherein
the foundation further comprises at least one restoring element, wherein the at least one restoring element is directly connectable to the tower (2) or indirectly connectable via one or more transition pieces,
**characterized in that**
a natural frequency of the offshore structure is below an excitation from a simple number of revolution 1P of at least one exciting structural element,
wherein the natural frequency of the offshore structure is below a frequency of 0.15 Hz, in particular below a frequency of 0.10 Hz,
and wherein the at least one restoring element is designed in such a way that, in a tilted position of the tower (2) in which the longitudinal extension direction of the tower (2) runs outside a vertically extending axis (V), tensile and/or
compressive forces are transmittable onto the tower (2) by the at least one restoring element, so that the tower (2) can be straightened up.

2. Foundation according to claim 1, **characterized in that** the anchoring section (3) of the tower (2) which is anchorable in the seabed (M) engages with the seabed (M), wherein the anchoring section (3) of the tower (2) that engages with the seabed (M) is movable in the seabed (M) when the tower (2) is tilted.

3. Foundation according to claim 2, **characterized in that** the tilted position of the tower (2) relative to the seabed (M), which occurs in a limit state of the bearing
capacity of the foundation, is greater than 0.10°, in particular greater than 0.20° and in particular greater than 0.5°, and the tilted position after a cyclic load is greater than 0.05°.

4. Foundation according to claim 1, **characterized in that** an upper section (4) of the tower (2) is movable relative to the anchoring section (3) of the tower (2), wherein in a tilted position of the tower (2) the anchoring section (3) in the seabed (M) remains substantially in its position.

5. Foundation according to one of the preceding claims, **characterized in that** the anchoring section (3) of the tower (2) is designed substantially hollow cylindrical.

6. Foundation according to claim 4 or claim 5, **characterized in that** the upper section (4) of the tower (2) is at least partially movably supported within and in a receiving area of the anchoring section (3) of the tower (2), in particular the anchoring section (3) of the tower (2) being filled with a filling material in the receiving area.

7. Foundation according to one of claims 4 to 6, **characterized in that** the upper section (4) of the tower (2) extends tapered within the receiving area of the anchoring section (3) from the tower (2).

8. Foundation according to one of claims 4 to 7, **characterized in that** the receiving area of the anchoring section (3) of the tower (2) has at least one spring and/or damping element, so that when the upper section (4) of the tower (2) moves relative to the anchoring section (3) of the tower (2), the upper section (4) of the tower (2) is spring-loadable and/or dampable.

9. Foundation according to one of the preceding claims, **characterized in that** the at least one restoring element comprises at least one buoyancy body (6) or is designed as at least one buoyancy body (6), wherein in particular the at least one buoyancy body (6) has a substantially conical or curved geometry.

10. Foundation according to claim 9, wherein the at least one buoyancy body (6) is arranged below the water surface (S) and at least partially surrounding the tower (2) in a horizontal plane.

11. Foundation according to one of the preceding claims, **characterized in that** the at least one restoring element comprises one or more anchors, the one or more anchors being connectable to the seabed (M) and being connected to the tower (2) in each case by means of a flexible connection which, when the tower (2) is tilted, generate a restoring tensile and/or compressive force in the direction opposite to the tilted position by tightening the flexible connection.

12. Foundation according to one of the preceding claims, **characterized in that** the at least one restoring element comprises one or more stabilizing devices or is designed as one or more stabilizing devices, preferably the one or more stabilizing devices being extendable from the tower (2), or preferably being integrated gyro stabilizers.

13. Foundation according to one of the preceding claims, **characterized in that** a center of gravity of the offshore structure is designed such that parts of a ground-deadweight and ground-frictional forces to be overcome of the seabed (M) are set below a center of gravity of a liquid displaced by the foundation.

14. An offshore structure comprising a foundation according to one of claims 1 to 13.

## Revendications

1. Fondation pour une construction offshore, comprenant :
- une tour (2) avec une section d'ancrage (3) pouvant être ancrée dans le fond marin (M) et
- une section de liaison disposée à l'extrémité opposée,
- une installation de production d'électricité, qui eut être disposée au-dessus de la surface de l'eau (S), pouvant être reliée .à la section de liaison de la tour (2) ; et
- la fondation comprenant en outre au moins un élément de rappel,
- ledit au moins un élément de rappel pouvant être relié directement à la tour (2) ou pouvant être relié indirectement par l'intermédiaire d'une ou plusieurs pièces de transition,
**caractérisée**
- **en ce qu'**une fréquence propre de la construction offshore est inférieure à une excitation résultant d'un nombre simple de tours 1P d'au moins un élément de construction excitateur,
- la fréquence propre de la construction offshore étant inférieure à une fréquence de 0,15 Hz, en particulier inférieure à une fréquence de 0,10 Hz, et
- l'au moins un élément de rappel étant conçu de telle sorte que, dans le cas d'une inclinaison de la tour (2), dans laquelle la direction d'extension longitudinale de la tour (2) s'étend en dehors d'un axe (V) s'étendant verticalement, des forces de traction et/ou de compression peuvent être transmises à la tour (2) par l'au moins un élément de rappel, de sorte que la tour (2) peut être redressée.

2. Fondation selon la revendication 1, **caractérisée en ce que** la section d'ancrage (3) de la tour (2) pouvant être ancrée dans le fond marin (M) s'engage dans le fond marin (M), la section d'ancrage (3) de la tour (2) s'engageant dans le fond marin (M) pouvant être déplacée dans le fond marin (M) lorsque la tour (2) est inclinée.

3. Fondation selon la revendication 2, **caractérisée en ce que** l'inclinaison de la tour (2) par rapport au fond marin (M), qui se produit dans un état limite de la capacité de chargement de la fondation, est supérieure à 0,10°, en particulier supérieure à 0,20° et en particulier supérieure à 0,5°, et l'inclinaison après une charge cyclique est supérieure à 0,05°.

4. Fondation selon la revendication 1, **caractérisée en ce qu'**une section supérieure (4) de la tour (2) peut être déplacée par rapport à la section d'ancrage (3) de la tour (2), la section d'ancrage (3) restant sensiblement dans sa position dans le fond marin (M) lorsque la tour (2) est inclinée.

5. Fondation selon l'une quelconque des revendications précédentes, **caractérisée en ce que** la section d'ancrage (3) de la tour (2) est formée de forme sensiblement cylindrique creuse.

6. Fondation selon la revendication 4 ou la revendication 5, **caractérisée en ce que** la section supérieure (4) de la tour (2) est montée de manière mobile au moins partiellement à l'intérieur et dans une zone de réception de la section d'ancrage (3) de la tour (2), la section d'ancrage (3) de la tour (2) en particulier étant remplie d'un matériau de remplissage dans la zone de réception.

7. Fondation selon l'une quelconque des revendications 4 à 6, **caractérisée en ce que** la section supérieure (4) de la tour (2) s'étend en s'effilant de manière conique à l'intérieur de la zone de réception de la section d'ancrage (3) de la tour (2).

8. Fondation selon l'une des revendications 4 à 7, **caractérisée en ce que** la zone de réception de la section d'ancrage (3) de la tour (2) comporte au moins un élément élastique et/ou amortisseur, de sorte que, lors d'un déplacement de la section supérieure (4) de la tour (2) par rapport à la section d'ancrage (3) de la tour (2), la section supérieure (4) de la tour (2) peut être soumise à un effet élastique et/ou amortie.

9. Fondation selon l'une quelconque des revendications précédentes, **caractérisée en ce que** l'au moins un élément de rappel comprend au moins un corps de flottaison (6) ou est configuré comme au moins un corps de flottaison (6), l'au moins un corps de flottaison (6) présentant notamment une géométrie sensiblement conique ou bombée.

10. Fondation selon la revendication 9, dans laquelle l'au moins un corps de flottaison (6) est disposé en-dessous de la surface de l'eau (S) et entoure la tour (2) au moins partiellement dans un plan horizontal.

11. Fondation selon l'une des revendications précédentes, **caractérisée en ce que** l'au moins un élément de rappel comprend une ou plusieurs ancres, l'une ou plusieurs ancres pouvant être reliées au fond marin (M) et étant reliées à la tour (2) chacune au moyen d'une liaison flexible qui, lorsque la tour (2) est inclinée, lesquelles ancres génèrent une force de traction et/ou de compression de rappel dans la direction opposée à l'inclinaison par une tension de la liaison flexible.

12. Fondation selon l'une des revendications précédentes, **caractérisée en ce que** l'au moins un élément de rappel comprend un ou plusieurs dispositifs de stabilisation ou est conçu comme un ou plusieurs dispositifs de stabilisation, les un ou plusieurs dispositifs de stabilisation pouvant de préférence être déployés à partir de la tour (2), ou étant de préférence des stabilisateurs gyroscopiques intégrés.

13. Fondation selon l'une des revendications précédentes, **caractérisée en ce que** le centre de gravité de la construction offshore est conçu de telle sorte que des parts d'un poids propre du sol et des forces de frottement du sol à surmonter du fond marin (M) se situent en dessous du centre de gravité d'un liquide déplacé par la fondation.

14. Construction offshore comprenant une fondation selon l'une quelconque des revendications 1 à 13.
